# EUROPEAN PATENT SPECIFICATION

(11) **EP 0 386 905 B1**
(45) Date of publication and mention of the grant of the patent: **07.12.1994**
(21) Application number: 90301867.9
(22) Date of filing: 21.02.1990
(51) Int. Cl.: C08J 5/10, C08L 21/00, C08K 5/32, C08K 5/3442

(54) **Method of bonding vulcanisable elastomer compositions to metals**
Verfahren zum Kleben vulkanisierbaren Kautschukmassen auf Metalle
Procédé pour lier des compositions vulcanisibles d'élastomère aux métaux

(30) Priority: 04.03.1989 GB 8905009
(43) Date of publication of application: 12.09.1990
(73) Proprietor: SUMITOMO RUBBER INDUSTRIES LIMITED, Kobe Port Kobe 651-01 (JP)
(72) Inventor: Powell, Brian David William, Nuneaton, Warwickshire CV11 4TL (GB)
(74) Representative: Parr, Ronald Edward R.E. Parr & Co.

(56) References cited:
- EP-A- 0 204 990
- FR-A- 2 122 949
- FR-A- 2 206 331
- DATABASE WPIL, abs.no.84-162934, Derwent Publi&& SU-A-630885
- DATABASE WPIL, abs.no.82-09948J, Derwent Publi&& JP-A-57012417

## Description

This invention relates to a method of bonding vulcanisable elastomer compositions to metals; in particular, it relates to the use in that method of certain polyisocyanate cross-linking agents. It also relates to elastomer topping compositions, to topped steel fabrics including such compositions and to steel-reinforced tyres including them.

Vehicle tyres whose treads are reinforced by steel reinforcements have become widely accepted in the automotive industry. However, they suffer from a substantial disadvantage in that the steel reinforcement is susceptible to the effect of moisture arising, for example, by incidental incorporation during manufacture or, externally, by way of accidental piercing of the tyre tread. Even the presence of the brass coating normally applied to the steel reinforcement does not wholly protect the latter from the effect of such water. The primary purpose of the brass coating is to provide good adhesion between the steel reinforcement, which is usually in filamentary form, and the rubber composition in which the brass-coated steel-reinforcement is embedded or is in other close juxtaposition. The problem of corrosion of the steel filaments arises as a result of an unwanted reaction which takes place over a period of time between the rubber composition and the copper and/or the zinc of the brass leading to degradation of the latter and its separation from the underlying steel filaments. This permits the moisture to come into contact with the steel filaments leading to corrosion and, in severe cases, to their breakdown. The practical result of such breakdown is extremely serious since once the belt-like steel reinforcement breaks it can no longer resist the intense force acting upon it when the tyre containing it rotates under load.

As a means of improving the bond between the brass-plated steel filaments and the rubber topping composition it is known to incorporate in the rubber composition compounds of a transition metal, for example salts of cobalt or nickel. Such substances are referred to herein as "bonding agents". In particular, cobalt and nickel salts of organic acids such as stearic and naphthenic acids have been used. A cobalt bonding agent which has found widespread use is cobalt stearate. However, although use of cobalt stearate improves the corrosion-resistance its use is accompanied by the substantial disadvantage of a derogation of the ageing properties of the rubber composition, especially ageing at elevated temperatures. As elevated temperatures are commonly generated in tyres, especially truck tyres, the use of cobalt stearate as a bonding agent is far from satisfactory.

WPIL/Derwent, abs. 84-162 934 discloses that improved adhesion of a metal reinforcement to a rubber composition is obtained if the rubber composition is prepared in two stages: first unsaturated rubber is mixed at the rate of 60 revolutions per minute and for 4 minutes with cobalt acetate or naphthenate and oligodiene diisocyanate or oligodiene diurethane-diepoxide; and secondly, resotopin p.tert. butyl phenol formaldehyde resin, epoxy resin or p-octyl-phenol disulphide formaldehyde resin and sulphur or sulpenamide vulcanising agent are added and mixing is continued for 2 minutes at 30 revolutions per minute.

EP-A-0 204 990 discloses a method for improving metal adhesion and metal adhesion properties between a vulcanizable rubber composition and brass or zinc or brass-plated or zinc-plated metallic reinforcing element includes dispersing from about 0.5 to about 12.5 parts by weight of an organic salt of nickel or cobalt per 100 parts of rubber component in a sulfur-vulcanizable rubber composition and dispersing from about 0.5 to 15 parts by weight of a thermosetting two-step phenolic resin per 100 parts of the rubber component in the same rubber composition prior to curing.

It has now been found, according to the present invention, that the adverse effect of transition metal bonding agents such as cobalt stearate on ageing can be mitigated to a substantial extent by the conjoint use of certain polyisocyanate cross-linking agents.

Thus, according to a first aspect the invention provides a method of bonding a vulcanisable elastomer composition to a metal, in which the composition is vulcanised while in contact with the metal and the composition contains:
(a) A reaction product of a polyisocyanate and a nitroso-phenol having the general formula (I): 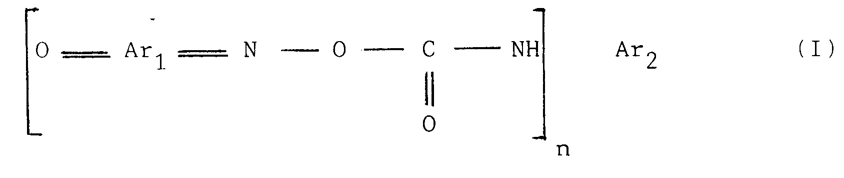 where Ar₁ is an arylene radical;
   Ar₂ is an aromatic or aliphatic moiety; and
   n is 2 or 3; and
(b) a cobalt or nickel bonding agent.
   A preferred form of said reaction product is referred to herein, for the sake of convenience as a "diiisocyanate cross-linking agent".

The polyisocyanate moiety of the reaction product is conveniently derived from an aromatic di- or triisocyanate for example TDI or MDI. TDI and MDI are respectively common abbreviations for toluene diisocyanate (for example 2,4-toluene diisocyanate) and diphenylmethane diisocyanate (for example the 4,4' isomer which is known as methylene bis (4-phenylisocyanate)).

The nitroso phenol component of said reaction product is conveniently a 4-nitroso-phenol, for example 4-nitroso phenol itself or an alkyl-substituted 4-nitroso phenol (for example a 2,6-dimethyl 4-nitroso phenol or other 2,6-dialkyl-4-nitroso phenol, where alkyl is a C₁₋₄ alkyl radical). As an alternative the nitroso phenol can be mono-alkyl substituted.

In a second aspect the invention provides a method of bonding a vulcanisable elastomer composition to a metal, in which the composition is vulcanised while in contact with the metal and the composition contains:
(a) a compound of the general formula (II): 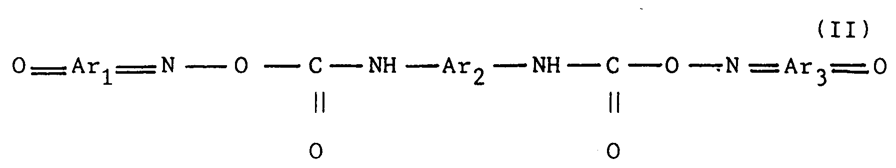 where Ar₁ and Ar₃, which can be the same or different, are each arylene or substituted arylene radical and Ar₂ is an aromatic or aliphatic moiety; and
(b) a cobalt or nickel bonding agent.
   Ar₂ can, for example, be 2,4-ditolylene or a dimer of tolyl-4-isocyanate.

The compounds of formula II can be obtained by reaction of the appropriate nitroso phenol and diisocyanate. In the compounds of general formula II Ar₁ and Ar₃ which can be the same or different, can be, for example phenylene or phenylene substituted with one or more C₁₋₄ alkyl groups. The moiety Ar₂ can be, for example, a phenylene or substituted phenylene, 2,4-tolylene or tolyl-4-isocyanate. Ar₂ can, for example, comprise a tolylene or tolyl moiety derived from TDI (for instance TDI in monomeric or dimeric form), or it can be a group of formula (III): Ar₄ - R - Ar₅ where Ar₄ and Ar₅, which can be the same or different, are each phenylene or substituted phenylene and R is a C₁₋₄ or other alkylene group.

Examples of diisocyanate cross-linking agents in which Ar₂ is derived from a dimer of TDI are the compounds of general Formula (IV): 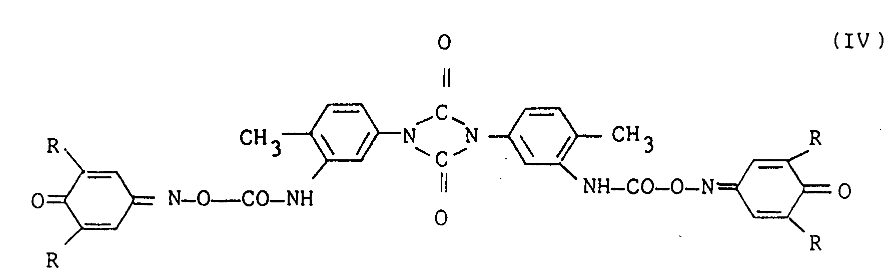
where each R, which can be the same or different, is hydrogen or alkyl, for example methyl or other C₁₋₄ alkyl. A preferred compound of general formula (IV) is one in which each R is methyl.

Examples of diisocyanate cross-linking agents in which Ar₂ is the group Ar₄-R-Ar₅ are the compounds of the general formula (V): 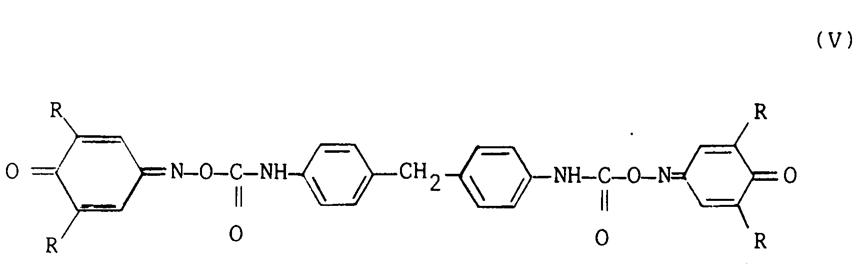
where R, which can be the same or different, is hydrogen or alkyl, for example methyl or other C₁₋₄ alkyl. A preferred compound of general formual (V) is one in which each R is methyl.

The particular compounds of general formulae (IV) and (V) where each substituent R is methyl are sold as commercial formulations under the Trade Marks Novor 924 and Novor 950, respectively.

In the present invention the elastomer can be any suitable natural or synthetic rubber or a blend thereof. For example, the elastomer can be a natural rubber, a synthetic polyisoprene (especially one having a high cis content) or a blend of a natural rubber and synthetic polyisoprene. In such blends the natural rubber and synthetic polyisoprene can be present, for example, in a proportion in the range 80:20 to 20:80 (especially 60:40 to 40:60) by weight.

With regard to the amount in which the diisocyanate cross-linking agent is used, suitable amounts will depend, to some extent at least, on the amount of cobalt or nickel bonding agent in the composition which can be, for example, in the range 0.5 to 4 (especially 1 to 3) parts by weight per 100 parts of elastomer. Where the diisocyanate cross-linking agent is the particular compound of general formula (IV) where each R substituent is methyl. Very good results have been obtained by using about 2.6 parts by weight of that compound per 100 parts of rubber, the composition containing two parts by weight of cobalt stearate. Thus, in this particular case the ratio of diisocyanate cross-linking agent to cobalt bonding agent is about 1.3:1. Thus, for example, the amount of diisocyanate cross-linking agent can conveniently be in the range 1 to 2 parts by weight for each part of cobalt bonding agent, though smaller amounts of the cross-linking agent, for example 0.5 part per part of cobalt bonding agent can be used if desired. Similarly larger amounts of cross-linking agent can be used, for example up to 4 parts per part of cobalt bonding agent. However, it will be appreciated by those skilled in the art that the upper practicable limit of cross-linking agent will depend on the vulcanisation system used, especially in respect of sulphur and accelerator loadings.

It has been found that, where sulphur is used as a vulcanisation agent for the elastomer, it can be used in an amount in the range 3 to 8 parts by weight (especially 4 to 7 parts) per 100 parts of elastomer. It will be seen from Examples 1 and 2 that excellent results have been obtained in rubber compositions containing as much as 6 parts by weight of sulphur.

Examples of bonding agents useful in the present invention are cobalt and nickel salts of organic acids, for example alkanoic acids and napthenic acid. Suitable acids, for instance, comprise one or more alkanoic acids having 8 or more, for example 16 to 18 or more, carbon atoms in the molecule.

In a third aspect the present invention provides a topping composition for use in a steel-reinforced tyre, which comprises a vulcanisable elastomer; compounding ingredients for the elastomer; a reaction product according to the first aspect of the invention; and a cobalt or nickel bonding agent.

In a fourth aspect the invention provides a topped steel fabric comprising an array of steel-reinforcing cords or other filaments and a topping composition according to said third aspect of this invention; and in a fifth aspect the invention provides a tyre including a topping composition according to the third aspect of the invention or a topped steel fabric according to the fourth aspect of the invention.

It is believed that under the vulcanisation conditions of the method of the present invention (for example at a temperature of 140°C or more (e.g. 140 - 180°C) said reaction product dissociates to form two quinoneoxime molecules and one polyisocyanate molecule. For example, thermal dissociation of compounds of formula V is believed to involve the following reaction: 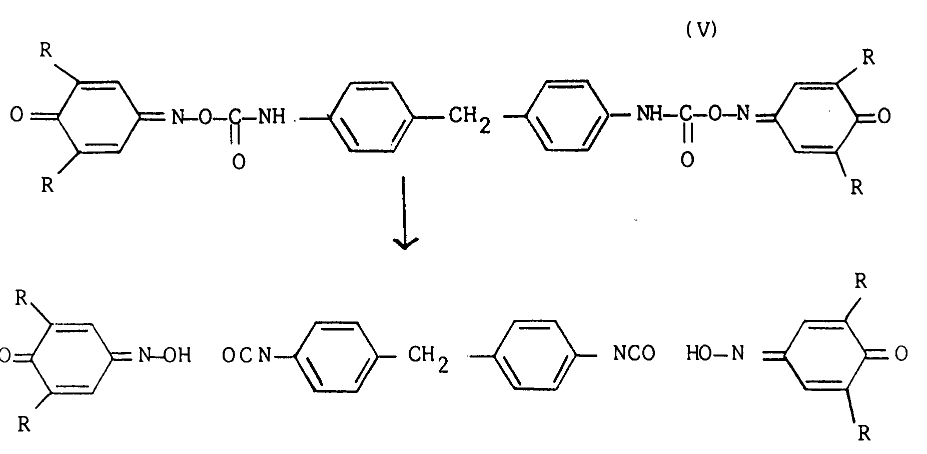
The quinoneoxime undergoes tautomerisation to produce the corresponding nitroso phenol which then attaches to the rubber by its nitroso groups to form pendant aminophenol groups which can then react with the polyisocyanate thereby to effect cross-linking.

The invention is illustrated by the following Examples in which, unless stated to the contrary, the "parts" referred to are parts by weight.

Abbreviations used in the Examples have the following meanings:
- SMR 20 -: a natural rubber
- 6 PPD -: an antidegradant comprising N-(1,3-dimethylbutyl)- N′-phenyl-p-phenylene diamine
- DCBS -: a vulcanisation accelerator comprising N,N′-dicyclohexyl-2-benzothiazole sulphenamide
- Novor 924 -: a diurethane cross-linking agent marketed by Rubber Consultants Ltd of Brickendonbury, England and comprising the compound of Formula IV above where R is methyl and a naphthenic process oil in the ratio 75/25 by weight.
- Novor 950 -: a diurethane cross-linking agent marketed by Rubber Consultants Ltd of Brickendonbury, England and comprising the compound of Formula V above where R is methyl.

### EXAMPLE 1

A rubber composition of the invention was obtained by mixing together in an internal mixer the ingredients shown in Table 1 except the sulphur and DCBS which were incorporated subsequently on a two-roll mill. This composition contained 2.0 parts of cobalt stearate bonding agent and 3.5 parts of Novor 924. As a control the rubber composition of Example A was obtained similarly, this composition containing 2.0 parts of cobalt stearate but no Novor 924.

The vulcanising properties of the compositions of Example 1 and Example A were measured using a Monsanto rheometer at 150°C, and the results obtained are included in Table 1.

**TABLE 1**

| | **Example** | |
|---|---|---|
| | **A** | **1** |
| SMR 20 natural rubber | 50.0 | 50.0 |
| Isoprene rubber(high cis content) | 50.0 | 50.0 |
| Zinc oxide | 8.0 | 8.0 |
| Carbon black N234 | 52.0 | 52.0 |
| 6 PPD | 2.0 | 2.0 |
| Cobalt stearate | 2.0 | 2.0 |
| Novor 924 | - | 3.5 |
| Sulphur | 6.0 | 6.0 |
| DCBS | 0.8 | 0.8 |

| Monsanto Rheometer 150°C (ASTM D-2084) | | |
|---|---|---|
| M_{L} dNm | 19.3 | 19.0 |
| M_{H} dNm | 114.1 | 130.0 |
| tₛ2 mins | 4.7 | 5.2 |
| t'_{c} (90) mins | 19.8 | 17.9 |

From the unvulcanised topping compositions of Example 1 and Example A test samples were produced by embedding therein brass-plated steel cord and then curing for 30 minutes at 145°C. The adhesion of the topping compositions to the brass-plated steel cords was then measured according to ASTM D-2229 (see Note below). The results obtained are shown in Table 2. There are also included in Table 2 hardness values according to ASTM D-2240 carried out on vulcanised samples of the topping compositions of Examples 1 and A.

**TABLE 2**

| Adhesion to brass-plated steel cord (ASTM D-2229: see Note below) | | |
|---|---|---|
| | Example | |
| | A (% reduction) | 1 (% reduction) |
| Initial N/25mm | 1,714 | 1,706 |
| Air aged 48 hr/130°C N/25mm | 1,631 (-4.8) | 1,700 (-0.4) |
| Air aged 96 hr/130°C N/25mm | 1,404 (-18.1) | 1,644 (-3.6) |

| Hardness Shore A (ASTM D-2240) | | |
|---|---|---|
| Initial | 74 | 78 |
| Air aged 48/hr/130°C | 91 | 93 |
| Air aged 96 hr/130°C | 94 | 94 |
| NOTE: The record construction was one which has three cords of 0.2mm diameter in the centre and arranged around those three cords, six cords each of 0.35mm diameter. Such a cord is known as a 1 x 3 x 0.20mm + 6 x 0.35mm cord. The cord had been plated with brass of 64% copper content. | | |

It will be seen from Table 2 that the adhesion of the composition of Example A falls substantially from an initial value of 1,714 N/25mm prior to ageing to 1,404 N/25mm after ageing for 96 hours. In marked contrast to this the adhesion of the composition of Example 1 shows a relatively small reduction in the adhesion value from 1,706 N/25mm prior to ageing to 1,644 N/25 mm after ageing for 96 hours.

It will be appreciated that the amount of 3.5 parts by weight of Novor 924 used in Example 1 (and in Example 2 below) constitutes the use of 2.625 parts by weight of the particular compound of general formula (IV) above where each R is methyl, because Novor 924 consists of 75% of that compound and 25% of naphthenic oil.

### EXAMPLE 2

There are now described two further topping compositions, one of which is an embodiment of the invention, the other being a comparison compound. The first includes 3.5 parts of Novor 924 and 2.0 parts of cobalt stearate bonding agent. The comparison Example B includes 2.0 parts of cobalt stearate but no Novor 924. Example 2, like Example 1 contains a relatively large amount (6.0 parts) of sulphur . Thus, the ingredients used in producing these two compositions are the same as those used for Examples 1 and A except that the vulcanisation accelerator DCBS has been omitted. It was found that in Example 2 and Example B vulcanisation proceeded satisfactorily though at a slower rate than in Example 1 where DCBS was used.

The ingredients of Example 2 and Example B are shown in Table 3 below which also includes the physical properties obtained using a Monsanto rheometer at 150°C.

**TABLE 3**

| | **Example** | |
|---|---|---|
| | **B** | **2** |
| SMR 20 Natural rubber | 50.0 | 50.0 |
| Isoprene rubber(high cis content) | 50.0 | 50.0 |
| Zinc oxide | 8.0 | 8.0 |
| Carbon black N234 | 52.0 | 52.0 |
| 6PPD | 2.0 | 2.0 |
| Cobalt stearate | 2.0 | 2.0 |
| Novor 924 | - | 3.5 |
| Sulphur | 6.0 | 6.0 |

| Monsanto Rheometer 150°C (ASTM D-2084) | | |
|---|---|---|
| M_{L} dNm | 20.0 | 20.7 |
| M_{H} dNm | 84.5 | 89.3 |
| tₛ2 mins | 4.7 | 5.3 |
| t'_{c}(90) mins | 46.2 | 45.0 |

The unvulcanised topping compositions of Examples 2 and B were then bonded to brass-plated steel cord, cured and their adhesion tested under the conditions given in Example 1. The results are given in Table 4 below.

**TABLE 4**

| Adhesion to brass plated steel cord (ASTM D-2229) | | |
|---|---|---|
| | Example | |
| | B (% reduction) | 2 (% reduction |
| Initial N/25mm | 1,704 | 1,598 |
| Air aged 48hr/130°C N/25mm | 1,703 (-0.1) | 1,707 (+6.8) |
| Air aged 96hr/130°C N/25mm | 1,591 (-6.6) | 1,684 (+5.4) |

| Hardness shore A (ASTM D-2240) | | |
|---|---|---|
| Initial | 67 | 73 |
| Air aged 48hr/130°C | 92 | 92 |
| Air aged 96hr/130°C | 93 | 94 |

It will be seen from Table 4 that the adhesion obtained using the composition of Example B was 1,704 N/25mm prior to air ageing but fell to 1,591 N/25mm after 96 hours air ageing. On the other hand, the composition of Example 2 actually increased from the initial value of 1,598 N/25mm prior to ageing to 1,684 N/25mm after 96 hours ageing.

The hardness values obtained using vulcanised samples of the compositions of Examples 2 and B have been included in Table 4.

### EXAMPLE 3

There are now described two further topping compositions, one of which is an embodiment of the invention, the other being a comparison compound. The first includes 2.0 parts of Novor 924 and 1.0 part of cobalt stearate bonding agent. The comparison Example C includes 1.0 part of cobalt stearate but no Novor 924. Example 3, like Example 1, contains a relatively large amount (6.0 parts) of sulphur. The elastomer in the two Examples was 100 parts of natural rubber.

The ingredients of Example 3 and Example C are shown in Table 5 below which also includes the physical properties obtained using a Monsanto rheometer at 150°C.

**TABLE 5**

| | **C** | **3** |
|---|---|---|
| SMR 20 natural rubber | 100.0 | 100.0 |
| Zinc oxide | 8.0 | 8.0 |
| Carbon black N220 | 55.0 | 55.0 |
| 6 PPD | 2.0 | 2.0 |
| Cobalt stearate | 1.0 | 1.0 |
| Novor 924 | - | 2.0 |
| Sulphur | 6.0 | 6.0 |
| DCBS | 0.4 | 0.4 |

| Monsanto Rheometer 150°C (ASTM D-2084) | | |
|---|---|---|
| M_{L} dNm | 30.7 | 29.1 |
| M_{H} dNm | 140.8 | 134.2 |
| tₛ2 mins | 2.9 | 3.5 |
| t'_{c}(90) mins | 28.9 | 37.8 |

The unvulcanised topping compositions of Examples 3 and C were then bonded to brass-plated steel cord, cured and their adhesion tested under the conditions given in Example 1 except that the embedded length of cord was 20mm instead of 25mm. The results are given in Table 6 below.

**TABLE 6**

| Adhesion to brass plated steel cord (ASTM D-2229) | | |
|---|---|---|
| | Example | |
| | C (% reduction) | 3 (% reduction) |
| Initial N/20mm | 1,520 | 1,540 |
| Air aged 96hr/130°C N/20mm | 1,100 (-27.6) | 1,200(-22.1) |
| Steam aged 16hr/120°C N/20mm | 1,330 (-12.5) | 1,550 (+0.6) |

| Hardness Shore A (ASTM D-2240) | | |
|---|---|---|
| Initial | 81 | 82 |
| Air aged 96hr/130°C | 95 | 95 |
| Steam aged 16hr/120°C | 85 | 85 |

It will be seen from Table 6 that the adhesion obtained using the composition of Example C was 1,520 N/20mm prior to air ageing but fell to 1,100 N/20mm after 96 hours air ageing. On the other hand, the composition of Example 3 whose initial value was 1,540 N/20mm prior to ageing fell only to 1,200 N/20mm after 96 hours ageing.

The hardness values obtained using vulcanised samples of the compositions of Examples 3 and C have been included in Table 6.

### EXAMPLE 4

There is now described a further topping composition, an embodiment of the invention, which includes 2.0 parts of Novor 950 and 1.0 part of cobalt stearate bonding agent. Example 4, like Example 1, contains a relatively large amount (6.0 parts) of sulphur.

The ingredients of Example 4 are shown in Table 7 below which also includes the physical properties obtained using a Monsanto rheometer at 150°C.

**TABLE 7**

| | |
|---|---|
| SMR 20 natural rubber | 50.0 |
| Isoprene rubber(high cis content) | 50.0 |
| Zinc oxide | 8.0 |
| Carbon black N234 | 52.0 |
| 6PPD | 2.0 |
| Cobalt stearate | 1.0 |
| Novor 950 | 2.0 |
| Sulphur | 6.0 |
| DCBS | 0.4 |

| Monsanto Rheometer 150°C ASTM D-2084) | |
|---|---|
| M_{L} dNm | 24.1 |
| M_{H} dNm | 111.8 |
| tₛ2 mins | 4.7 |
| t'_{c} (90) mins | 35.0 |

The unvulcanised topping composition of Example: 4 was then bonded to brass-plated steel cord, cured and adhesion tested under the conditions given in Example 1 except that the embedded length of cord was 20 mm instead of 25mm.

The results are given in Table 8 below.

In the above Examples the vulcanisation accelerator used was DCBS. Similar results have been obtained using as vulcanisation accelerator tetramethyl thiuram disulphide (TMTD) or dibenzothiazole disulphide (MBTS) also known as benzothiazyl disulphide.

**TABLE 8**

| Adhesion to brass-plated steel cord (ASTM D-2229) | ( %reduction) |
|---|---|
| Initial N/20mm | 1,470 |
| Air aged 96 hr/130°C N/20mm | 1,260 (-14.3) |
| Steam aged 16hr/120°C N/20mm | 1,440 (-2.0) |

| Hardness Shore A (ASTM D-2240) | |
|---|---|
| Initial | - |
| Air aged 96hr/130°C | 92 |
| Steam aged 16hr/120°C | 78 |

The hardness values obtained using vulcanised samples of the composition of Example 4 have been included in Table 8.

Although the present invention has been described with particular reference to the use of cobalt and/or nickel compounds as the bonding agent, the invention extends to the use of other bonding agents comprising compounds of other transition elements.

## Claims

1. A method of bonding a vulcanisable elastomer composition to a metal, in which the composition is vulcanised while in contact with the metal and the composition contains:
(a) a reaction product of a polyisocyanate and a nitroso phenol, the reaction product having the general formula (I): 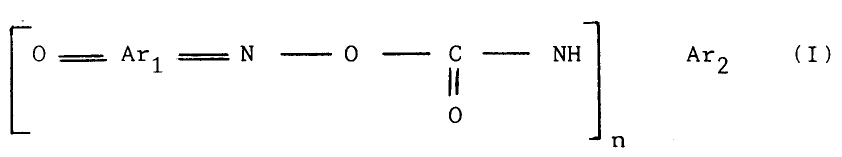 where Ar₁ is an arylene radical;
Ar₂ is an aromatic or aliphatic moiety; and
n is 2 or 3; and
(b) a cobalt or nickel bonding agent.

2. A method according to Claim 1, in which n is 2.

3. A method according to Claim 1, in which the polyisocyanate is an aromatic di- or tri- isocyanate.

4. A method according to Claim 3, in which the polyisocyanate is a toluene diisocyanate or a diphenylmethane diisocyanate.

5. A method according to any of the preceding claims, in which the nitroso phenol is a 4-nitroso phenol.

6. A method according to Claim 5, in which the 4-nitroso phenol is 4-nitroso phenol itself or an alkyl-substituted 4-nitroso phenol.

7. A method of bonding a vulcanisable elastomer composition to a metal, in which the composition is vulcanised while in contact with the metal and the composition contains;
(a) a compound of the general formula (II): 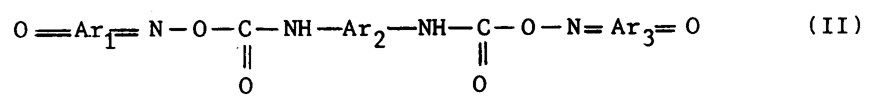 where Ar₁ and Ar₃, which can be the same or different, are each arylene or substituted arylene radical and Ar₂ is an aromatic or aliphatic moiety; and
(b) a cobalt or nickel bonding agent.

8. A method according to Claim 7, in which in formula (II) Ar₁ and Ar₃, which can be the same or different, are each phenylene or phenylene substituted with one or more C₁₋₄ alkyl groups.

9. A method according to Claim 7 or 8, in which in formula (II) Ar₂ is phenylene or substituted phenylene.

10. A method according to Claim 7 or 8, in which in formula (II) Ar₂ comprises 2,4-tolylene.

11. A method according to Claim 7 or 8, in which Ar₂ is a dimer of tolyl-4-isocyanate.

12. A method according to Claim 7 or 8, in which in formula (II) Ar₂ is a group (III):
Ar₄ ― R ― Ar₅ (III)
where Ar₄ and Ar₅, which can be the same or different, are each phenylene or substituted phenylene and R is an alkylene group.

13. A method according to Claim 7 or 8, in which said compound is one having the general formula (IV): 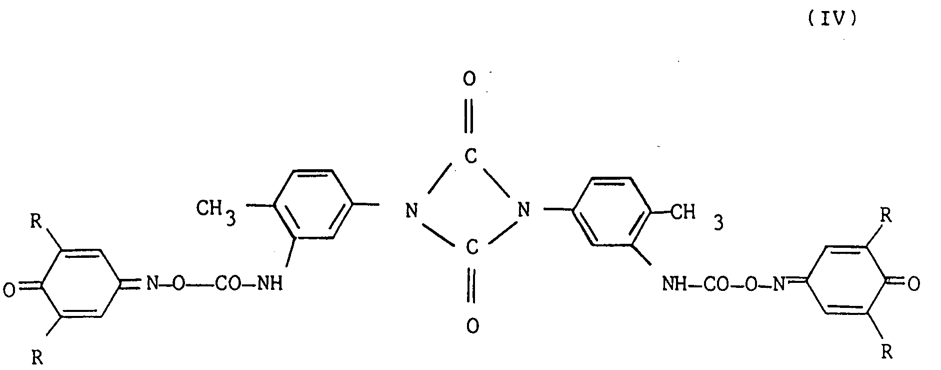 where each R, which can be the same or different, is an alkyl group.

14. A method according to Claim 13, where each R is methyl.

15. A method according to Claims 7 or 8, in which said compound is one having the general formula (V): 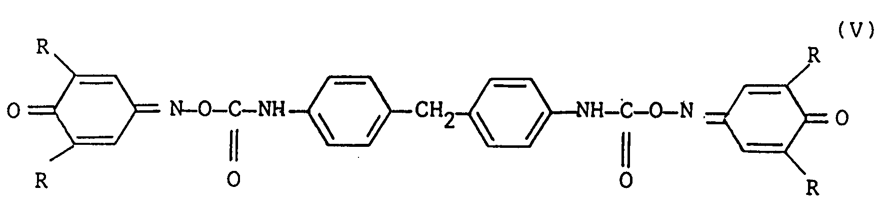 where each R, which can be the same or different, is alkyl.

16. A method according to Claim 15, where each R is methyl.

17. A method according to any of the preceding claims, in which said bonding agent is a cobalt or nickel salt of an organic acid.

18. A method according to Claim 17, in which the acid comprises one or more alkanoic acids having 8 or more carbon atoms in the molecule.

19. A method according to Claim 17, in which the acid is stearic acid or naphthenic acid.

20. A method according to any of the preceding claims, in which said composition is a topping composition for use in the production of a steel-reinforced tyre.

21. A composite structure obtained by bonding a vulcanisable rubber composition to a metal using the method claimed in any of the preceding claims.

22. A topping composition for use in a steel-reinforced tyre, which comprises:
a vulcanisable elastomer;
compounding ingredients for the elastomer;
a reaction product as defined in Claim 1; and
a cobalt or nickel bonding agent.

23. A topped steel fabric comprising an array of steel reinforcing cords or other filaments and a topping composition as claimed in Claim 22.

24. A tyre including a top steel fabric as claimed in Claim 23.

## Patentansprüche

1. Verfahren zum verbinden einer vulkanisierbaren Elastomer-zusammensetzung mit einem Metall, wobei die Zusammensetzung vulkanisiert wird, während sie in Kontakt mit dem Metall steht und wobei die Zusammensetzung enthält:
(a) ein Reaktionsprodukt eines Polyisozyanats und eines Nitrosophenols, wobei das Reaktionsprodukt die generelle Formel (I) hat: 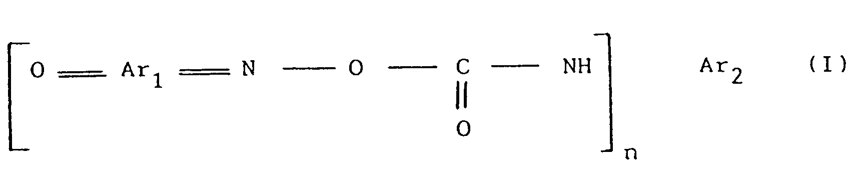 wobei Ar₁ ein Arylenradikal ist;
Ar₂ ein aromatischer oder aliphatischer Anteil ist; und
n gleich 2 oder 3 ist, und
(b) ein Kobalt- oder Nickelbindungsmittel.

2. Verfahren nach Anspruch 1, wobei n gleich 2 ist.

3. Verfahren nach Anspruch 1, wobei das Polyisocyanat ein aromatisches Di- oder Tri- Isocyanat ist.

4. Verfahren nach Anspruch 3, wobei das Polyisocyanat ein Toluol-Diisocyanat oder ein Diphenylmethan-Diisocyanat ist.

5. Verfahren nach einem der vorhergehenden Ansprüche, wobei das Nitrosophenol ein 4-Nitrosophenol ist.

6. Verfahren nach Anspruch 5, wobei das 4-Nitrosophenol 4-Nitrosophenol selbst oder ein alkyl-substituiertes 4-Nitrosophenol ist.

7. Verfahren zum verbinden einer vulkanisierbaren Elastomer-zusammensetzung mit einem Metall, wobei die Zusammensetzung vulkanisiert wird, während sie in Kontakt mit dem Metall steht und die Zusammensetzung enthält:
(a) eine Verbindung mit der allgemeinen Formel (II): 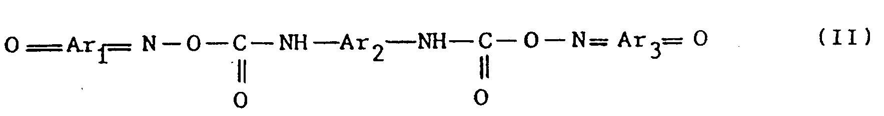 wobei Ar₁ und Ar₃, die gleich oder unterschiedlich sein können, jeweils Arylen oder substituierte Arylenradikale und Ar₂ ein aromatischer oder aliphatischer Anteil ist; und
(b) ein Kobalt- oder Nickelbindungsmittel.

8. Verfahren nach Anspruch 7, wobei in der Formel (II) Ar₁ und Ar₃, die gleich oder unterschiedlich sein können, jeweils Phenylen oder mit einer oder mehreren C₁₋₄ Alkylgruppen substituiertes Phenylen ist.

9. Verfahren nach Anspruch 7 oder 8, wobei in der Formel (II) Ar₂ Phenylen oder substituiertes Phenylen ist.

10. Verfahren nach Anspruch 7 oder 8, wobei in der Formel (II) Ar₂ 2,4-Tolylen aufweist.

11. Verfahren nach Anspruch 7 oder 8, wobei Ar₂ ein Dimer aus Tolyl-4-Isocyanat ist.

12. Verfahren nach Anspruch 7 oder 8, wobei in der Formel (II) Ar₂ eine Gruppe (III) ist:
Ar₄ ― R ― Ar₅ (III)
wobei Ar₄ und Ar₅, die gleich oder unterschiedlich sein können, jeweils Phenylen oder substituiertes Phenylen sind und wobei R eine Alkylengruppe ist.

13. Verfahren nach Anspruch 7 oder 8, wobei die Verbindung folgende allgemeine Formel (IV) aufweist: 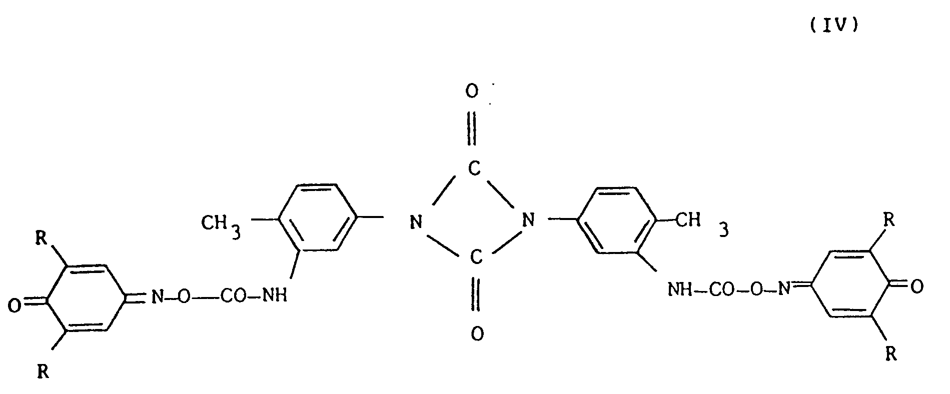 wobei jedes R, das gleich oder unterschiedlich sein kann, eine Alkylgruppe ist.

14. Verfahren nach Anspruch 13, wobei jedes R Methyl ist.

15. Verfahren nach Anspruch 7 oder 8, wobei die Verbindung folgende allgemeine Formel (V) aufweist: 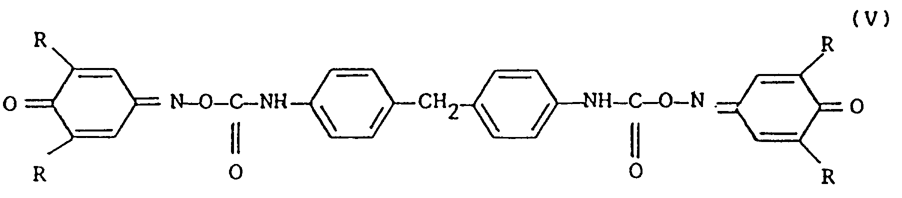 wobei jedes R, das gleich oder unterschiedlich sein kann, ein Alkyl ist.

16. verfahren nach Anspruch 15, wobei jedes R Methyl ist.

17. Verfahren nach einem der vorhergehenden Ansprüche, wobei das Bindungsmittel ein Kobalt- oder Nickelsalz einer organischen Säure ist.

18. Verfahren nach Anspruch 17, wobei die Säure eine oder mehrere alkanoide Säuren mit 8 oder mehr Kohlenstoffatomen in den Molekülen aufweist.

19. Verfahren nach Anspruch 17, wobei die Säure Stearinsäure oder Naphtalinsäure ist.

20. Verfahren nach einem der vorhergehenden Ansprüche, wobei die Zusammensetzung eine Überzug-Zusammensetzung zur Verwendung bei der Herstellung eines stahlverstärkten Reifens ist.

21. Verbundstruktur, die durch Binden einer vulkanisierbaren Gummizusammensetzung an ein Metall zur Verwendung des in einem der vorhergehenden Ansprüche beanspruchten Verfahrens erhalten wird.

22. Überzug-Zusammensetzung zur Verwendung in einem stahlverstärkten Reifen, mit:
einem vulkanisierbaren Elastomer;
Verbindungsbestandteilen für das Elastomer;
einem wie in Anspruch 1 definierten Reaktionsprodukt; und
einem Kobalt- oder Nickelbindungsmittel.

23. Getopptes Stahlgewebe mit einer Anordnung von stahlverstärkten Schnüren oder anderen Fasern und einer Überzug-Zusammensetzung wie in Anspruch 22 beansprucht.

24. Reifen mit einem Deckstahlgewebe wie in Anspruch 23 beansprucht.

## Revendications

1. Procédé de liaison d'une composition d'élastomère vulcanisable à un métal, dans lequel la composition est vulcanisée alors qu'elle est en contact avec le métal et la composition contient :
(a) un produit de réaction d'un polyisocyanate et d'un nitroso phénol, le produit de réaction ayant la formule générale (I) : 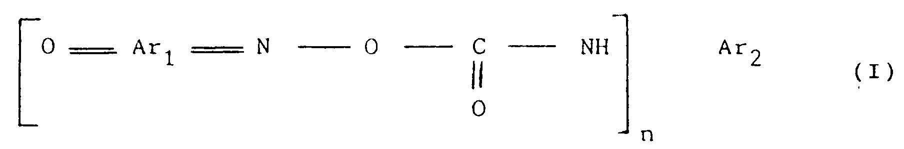 où :
- Ar₁ est un radical arylène ;
- Ar₂ est une fraction aromatique ou aliphatique ; et
- n vaut 2 ou 3 ; et
(b) un agent de liaison à base de cobalt ou de nickel.

2. Procédé selon la revendication 1, dans lequel n vaut 2.

3. Procédé selon la revendication 1, dans lequel le polyisocyanate est un di- ou tri- isocyanate aromatique.

4. Procédé selon la revendication 3, dans lequel le polyisocyanate est un toluène diisocyanate ou un diphényl méthane diisocyanate.

5. Procédé selon l'une des revendications précédentes; dans lequel le nitroso phénol est un 4-nitroso phénol.

6. Procédé selon la revendication 5, dans lequel le 4-nitroso phénol est le 4-nitroso phénol lui-même ou un 4-nitroso phénol substitué par alkyle.

7. Procédé de liaison d'une composition d'élastomère vulcanisable à un métal, dans lequel la composition est vulcanisée alors qu'elle est en contact avec le métal et la composition contient :
(a) un composé de la formule générale (II) : 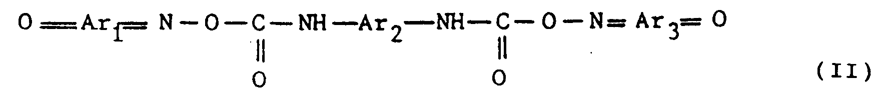 où :
- Ar₁ et Ar₃, qui peuvent être identiques ou différents, représentent chacun un radical arylène ou arylène substitué ; et
- Ar₂ représente une fraction aromatique ou aliphatique ; et
(b) un agent de liaison à base de cobalt ou de nickel.

8. Procédé selon la revendication 7, dans lequel, dans la formule (II), Ar₁ et Ar₃, qui peuvent être identiques ou différents, représentent chacun phénylène ou phénylène substitué par un ou plusieurs groupes alkyle en C₁₋₄.

9. Procédé selon la revendication 7 ou 8, dans lequel, dans la formule (II), Ar₂ représente phénylène ou phénylène substitué.

10. Procédé selon la revendication 7 ou 8, dans lequel, dans la formule (II), Ar₂ comprend du 2,4-tolylène.

11. Procédé selon la revendication 7 ou 8, dans lequel Ar₂ est un dimère de tolyl-4-isocyanate.

12. Procédé selon la revendication 7 ou 8, dans lequel, dans la formule (II), Ar₂ est un groupe (III) :
Ar₄ ― R ― Ar₅ (III)
où :
- Ar₄ et Ar₅_{,} qui peuvent être identiques ou différents, représentent chacun phénylène ou phénylène substitué ; et
- R représente un groupe alkylène.

13. Procédé selon la revendication 7 ou 8, dans lequel ledit composé est un composé représenté par la formule générale (IV) : 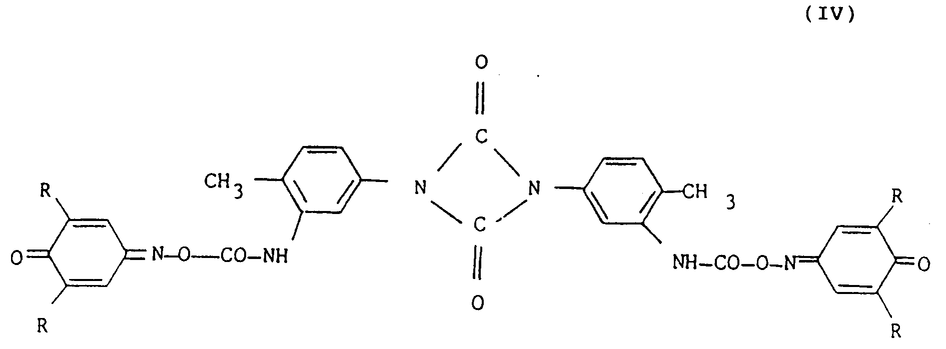 où les R, qui peuvent être identiques ou différents, représentent chacun un groupe alkyle.

14. Procédé selon la revendication 13, où chaque R représente méthyle.

15. Procédé selon la revendication 7 ou 8, dans lequel ledit composé est un composé représenté par la formule générale (V) : 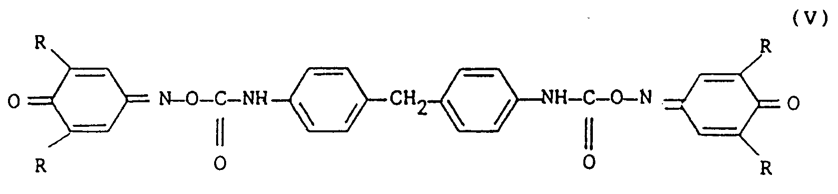 où les R, qui peuvent être identiques ou différents, représentent chacun alkyle.

16. Procédé selon la revendication 15, où chaque R représente méthyle.

17. Procédé selon l'une des revendications précédentes, dans lequel ledit agent de liaison est un sel de cobalt ou de nickel d'un acide organique.

18. Procédé selon la revendication 17, dans lequel l'acide comprend au moins un acide alcanoïque ayant 8 atomes de carbone ou davantage dans la molécule.

19. Procédé selon la revendication 17, dans lequel l'acide est l'acide stéarique ou l'acide naphténique.

20. Procédé selon l'une des revendications précédentes, dans lequel ladite composition est une composition de sommet destinée à être utilisée dans la fabrication d'un pneu à carcasse d'acier.

21. Structure composite obtenue par liaison d'une composition de caoutchouc vulcanisable à un métal à l'aide du procédé tel que défini à l'une des revendications précédentes.

22. Composition de sommet destinée à être utilisée dans un pneu à carcasse d'acier, qui comprend :
- un élastomère vulcanisable ;
- des ingrédients de mélange pour l'élastomère ;
- un produit de réaction tel que défini à la revendication 1 ; et
- un agent de liaison à base de cobalt ou de nickel.

23. Nappe d'acier de sommet comprenant un réseau de câbles ou autres fils de carcasse en acier et une composition de sommet telle que définie à la revendication 22.

24. Pneu comprenant une nappe d'acier de sommet telle que définie à la revendication 23.
